# EUROPEAN PATENT APPLICATION

(11) **EP 4 799 927 A1**
(43) Date of publication of application: **02.09.2026**
(21) Application number: 25305269.0
(22) Date of filing: 28.02.2025
(51) Int. Cl.: B64C 13/36, B64C 13/40, F15B 3/00, F15B 11/032, F15B 15/18

(54) **AN AIRCRAFT CONTROL SURFACE ACTUATION SYSTEM**

(71) Applicant: Goodrich Actuation Systems SAS, 27950 Saint-Marcel (FR)
(72) Inventor: MEDINA, Raphael, 27950 Saint-Marcel (FR); POTIER, Karl, 27950 Saint-Marcel (FR)
(74) Representative: Casalonga

(57) **Abstract**

An aircraft control surface actuation system comprising a reducer and an aircraft control surface, the reducer comprising: a first piston with a first frontal area, the first piston configured to move the aircraft control surface; and a second piston with a second frontal area, the second piston configured for actuation by an actuator. The second piston is in hydraulic communication with the first piston, such that movement of the second piston causes movement of the first piston. The second frontal area is different to the first frontal area to provide a reduction ratio between the actuator and the aircraft control surface.

## Description

### Technical Field

This disclosure relates to an aircraft control surface actuation system and an aircraft.

### Background

Actuator systems are commonly used to facilitate the movement of aircraft control surfaces. Both electro-mechanical actuators and electro-hydraulic actuators may be used as part of these systems.

Next generation aircraft are expected to have thinner wings, meaning that smaller actuator systems are often required. In many next generation applications, actuator systems may also be required to produce faster movements and faster response times under large external loads. These requirements pose challenges for current systems.

### Summary

According to a first aspect, there is provided an aircraft control surface actuation system comprising a reducer and an aircraft control surface, the reducer comprising: a first piston with a first frontal area, the first piston configured to move the aircraft control surface; and a second piston with a second frontal area, the second piston configured for actuation by an actuator, wherein the second piston is in hydraulic communication with the first piston, such that movement of the second piston causes movement of the first piston, wherein the second frontal area is different to the first frontal area to provide a reduction ratio between the actuator and the aircraft control surface.

The provision of a reduction ratio may mean that characteristics associated with the movement of the second piston can differ with characteristics associated with the movement of the first piston. This means that actuation by the actuator does not have to directly correspond to movement of the aircraft control surface, which may be particularly beneficial where there are high speed and/or high external loads in relation to the actuation surface.

The second frontal area may be larger than the first frontal area, such that the reduction ratio is greater than 1.

A reduction ratio greater than 1 allows for the output movement to be changed without facing certain limitations this may create, relating to the actuator. For example, a reduction ratio greater than 1 allows a speed of a movement provided to the aircraft control surface to be greater than a speed of a movement received from the actuator. This means that the speed of the movement to the aircraft control surface can be increased whilst avoiding the limitations related to a high speed at the actuator (e.g. screw size for an electro-mechanical actuator).

The second frontal area may substantially twice the first frontal area, such that the reduction ratio is substantially 2.

The second frontal area may be smaller than the first frontal area, such that the reduction ratio is less than 1.

A reduction ratio less than 1 also allows for the output movement to be changed without facing certain limitations this may create, relating to the actuator. For example, a reduction ratio less than 1 allows a load applied by the actuator to be less than a load applied to the aircraft control surface. This means that a high speed and high load requirement can be fulfilled in relation to the aircraft control surface whilst avoiding the limitations related to a high load at the actuator (e.g. pressure required for an electro-hydraulic actuator).

The second frontal area may be substantially half the first frontal area, such that the reduction ratio is substantially 0.5.

The reducer may further comprise a valve, the valve configured to control the hydraulic communication between the first piston and the second piston.

The valve may be configured to resist flow of a hydraulic fluid to resist movement of the first piston.

The valve may be configured to initiate a damping mode, wherein movement of the aircraft control surface is resisted in the damping mode.

The use of a damping mode may allow for increased control of the aircraft control surface without use of a complex additional mechanism.

The valve may be closable to prevent movement of the first piston.

This means that the valve may be used to initiate a locked mode, wherein movement of the aircraft control surface is stopped.

The second piston may comprise a screw element, the screw element configured for screw connection between the second piston and the actuator.

The aircraft control surface actuation system may further comprise the actuator.

The actuator may be an electro-mechanical actuator.

The actuator may be an electro-hydraulic actuator.

The aircraft control surface may be moveable in response to receipt of signals from an aircraft sensor.

According to a second aspect, there is provided an aircraft comprising the aircraft control surface actuation system of any preceding claim.

### Brief Description of the Drawings

Various examples will now be described, by way of example only, and with reference to the accompanying drawings, in which:
Fig. 1 shows a cross sectional view of a first aircraft control surface actuation system comprising an electro-mechanical actuator;
Fig. 2 shows a cross sectional view of a second aircraft control surface actuation system comprising an electro-mechanical actuator and a valve; and
Fig. 3 shows a cross sectional view of an aircraft control surface actuation system comprising an electro-hydraulic actuator.

### Detailed Description

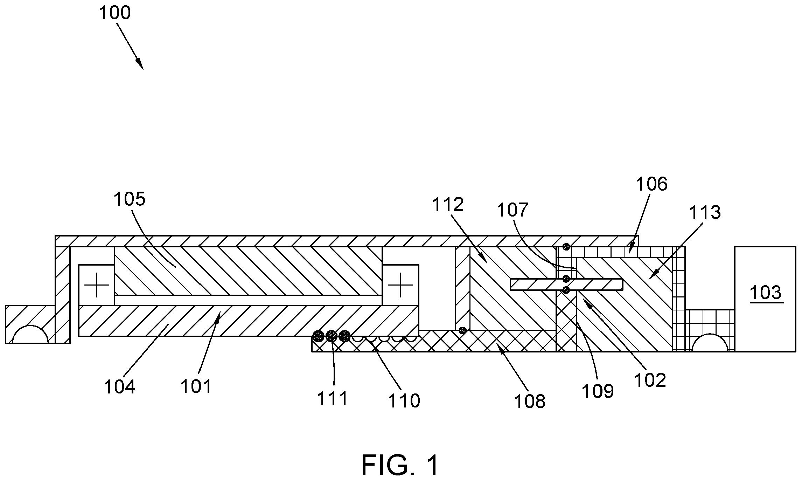

Referring to Fig. 1, a first aircraft control surface actuation system 100 is shown. The first aircraft control surface actuation system 100 comprises an actuator 101, a first reducer 102 and an aircraft control surface 103. In the embodiment shown in Fig. 1, the actuator 101 is an electro-mechanical actuator 101 (such as an electric motor) comprising a rotor 104 and a stator 105. The rotor 104 comprises a screw component 111.

The first reducer 102 comprises a first piston 106, a second piston 108, a first chamber 112 and a second chamber 113. The first piston 106 is coupled to the aircraft control surface 103 such that the first piston 106 is configured to move the aircraft control surface 103. In the present example, the aircraft control surface 103 is moveable in response to receipt of signals from an aircraft sensor (not shown). The signals from the aircraft sensor may indicate how the aircraft control surface 103 should be adjusted in real time, requiring high-speed movement of the aircraft control surface 103.

The second piston 108 is coupled to the actuator 101 such that the second piston 108 is configured for actuation by the actuator 101. The second piston 108 comprises a screw element 110, wherein the screw element 110 is configured for screw connection between the second piston 108 and the actuator 101. The screw element 110 is located at an end of the second piston 108 closest to the actuator 101. In the embodiment of Fig. 1, the screw element 110 is formed of a threaded shaft integrated in the second piston 108. The second piston 108 is connected to the actuator 101 via the screw component 111 in conjunction with the screw element 110. The screw element 110 and screw component 111 form the screw connection between the second piston 108 and the actuator 101, The second piston 108 is connected to the electro-mechanical actuator 101 such that movement of the stator 105 and rotor 104 causes movement of the second piston 108. More specifically, rotation of the rotor 104 causes translation of the second piston 108, wherein the translation is parallel to an axis of rotation of the rotor 104.

The second piston 108 is in hydraulic communication with the first piston 106, such that movement of the second piston 108 causes movement of the first piston 106. More specifically, movement of the second piston 108 in a first direction causes movement of the first piston 106 in a second direction, wherein the second direction is opposite to the first direction. In the embodiment of Fig. 1, the hydraulic communication of the first piston 106 and the second piston 108 is provided by a hydraulic fluid contained in the first chamber 112. The hydraulic fluid is in contact with both the first piston 106 and the second piston 108. When the second piston 108 receives a movement input from the actuator 101, the second piston 108 moves such that a primary force is applied to the hydraulic fluid in the first chamber 112. The application of the primary force to the hydraulic fluid results in a change in pressure of the hydraulic fluid in the first chamber 112. The change in pressure of the hydraulic fluid in the first chamber 112 results in the application of a secondary force to the first piston 106. The application of the secondary force to the first piston 106 results in a movement of the first piston 106. The movement of the first piston 106 provides movement to the aircraft control surface 103. The movement input received by the second piston 108 from the actuator 101 causes the movement provided by the first piston 106 to the aircraft control surface 103. The movement provided by the first piston 106 to the aircraft control surface 103 is dependent on the movement input received by the first piston 106 from the actuator 101.

In this embodiment, the primary force and the secondary force act in opposite directions to each other (i.e. the primary force is positive and the secondary force is negative, or vice versa). This means that the first piston 106 and the second piston 108 move in opposite directions when the primary force and the secondary force are acting.

In alternative embodiments, the hydraulic fluid may be replaced by an alternative fluid in the first chamber 112, for example compressed air. As such, in this context the term "hydraulic" communication/fluid may also cover "pneumatic" communication/fluid.

The second chamber 113 also contains hydraulic fluid in contact with both the first piston 106 and the second piston 108. The second chamber 113 comprises the same features as the first chamber 112, and repeated description of these is omitted. The first chamber 112 and second chamber 113 are located on opposing sides of both the first piston 106 and the second piston 108. The first chamber 112 and second chamber 113 may function simultaneously, such that the hydraulic communication of the first piston 106 and second piston 108 is facilitated by the hydraulic fluid in both the first chamber 112 and second chamber 113. The first chamber 112 and the second chamber 113 are separated, such that hydraulic fluid may not flow between the first chamber 112 and second chamber 113. If a system failure occurs such that either the first chamber 112 or second chamber 113 can no longer be used, the other chamber may function independently.

The movement of the first piston 106 acts under a first load and at a first speed. The first load is dependent upon the secondary force applied to the first piston 106 by the hydraulic fluid. The first speed corresponds to the speed at which the movement of the first piston 106 occurs. In this embodiment, the first speed corresponds to a speed of the output movement provided by the first piston 106 to the aircraft control surface 103.

The movement of the second piston 108 acts under a second load and at a second speed. The second load is dependent upon the primary force applied by the second piston 106 to the hydraulic fluid. The second speed corresponds to the speed at which the movement of the second piston 108 occurs. In this embodiment, the second speed corresponds to a speed of the input movement received by the second piston 108 from the actuator 101.

The first piston 106 has a first frontal area 107. The first frontal area 107 is defined by an area of a face located at an end of the first piston in contact with the hydraulic fluid. The second piston 108 has a second frontal area 109. The second frontal area 109 is defined by an area of a face located at an end of the first piston in contact with the hydraulic fluid.

The second frontal area 109 is different to the first frontal area 107 to provide a reduction ratio between the actuator 101 and the aircraft control surface 103. The reduction ratio is defined as the ratio between the second load and the first load. The reduction ratio may also be defined as the ratio between the first speed and the second speed. The reduction ratio is caused by a relative difference between the second frontal area 109 and the first frontal area 107.

In the first aircraft control surface actuation system 100 of Fig. 1, the second frontal area 109 is greater than the first frontal area 107, such that the reduction ratio is greater than 1. More specifically, the second frontal area 109 is substantially twice the first frontal area 107, such that the reduction ratio is substantially 2.

As described below, the second frontal area 109 may be smaller than the first frontal area 107, such that the reduction ratio is less than 1. In some embodiments, the second frontal area 109 may be substantially half the first frontal area 107, such that the reduction ratio is substantially 0.5.

The reduction ratio can be used to determine a ratio between the first speed and the second speed. For example, if the reduction ratio is greater than 1, the second speed will be smaller than the first speed. If the second speed is smaller than the first speed, the speed of the output movement from the first piston 106 will be greater than the speed of the input movement received by the second piston 108. If the reduction ratio is greater than 1, the movement speed of the aircraft control surface 103 will be greater than the movement speed provided by the actuator 101. In the exemplary embodiment of Fig.1, in which the reduction ratio is substantially 2, the second speed will be substantially half the first speed. This means that the speed of the aircraft control surface 103 will be substantially twice the speed provided by the actuator 103.

Alternatively, if the reduction ratio is less than 1, the second speed will be greater than the first speed. More specifically, if the reduction ratio = 0.5, the second speed will be twice the first speed.

The reduction ratio can be used to determine a ratio between the first load and the second load. For example, if the reduction ratio is greater than 1, the second load will be greater than the first load. If the second load is greater than the first load, the primary force applied to the hydraulic fluid by the second piston 108 is greater than the secondary force applied by the hydraulic fluid to the first piston 106. If the second load is greater than the first load, a load provided by the actuator 101 is greater than a load provided to the aircraft control surface 103. In the exemplary embodiment of Fig.1 in which the reduction ratio is substantially 2, the second load will be substantially twice the first load. This means that the load provided by the actuator 101 is substantially twice the load provided to the aircraft control surface 103.

Alternatively, if the reduction ratio is less than 1, the second load will be smaller than the first load. More specifically, if the reduction ratio = 0.5, the second load will be half the first load.

A system with a reduction ratio which is not equal to 1 may allow a better sized aircraft control actuation system, due to the different demands which may be required of the actuator 101 and the aircraft control surface 103. This is beneficial as in some applications, aircraft control surfaces require high movement speeds (e.g. when moving responsive to a sensor) and/or high loads (e.g. when large external loads are applied to the aircraft control surface), whilst different actuators may be better suited to different situations (e.g. some actuators are better suited to low speed/high load situations, whilst others are better suited to high speed/low load situations etc). The reduction ratio therefore allows the system to be tailored based on the specific situation faced.

In use, in order to move the aircraft control surface 103 from a retracted position to a deployed position, the stator 105 causes the rotor 104 to rotate in an initial direction. In the present embodiment, the stator is activated in response to the signals received from the aircraft sensor. Rotation of the rotor 104 then causes movement of the second piston 108. Movement of the second piston 108 then causes movement of the first piston 106, as described previously. Movement of the first piston 106 then provides movement to the aircraft control surface 103. The movement provided to the aircraft control surface 103 corresponds to the aircraft control surface 103 moving to the deployed position. In order to move the aircraft surface from the deployed position to the retracted position, the stator 105 causes the rotor 104 to rotate in a direction opposite to the initial direction. In some embodiments, the aircraft control surface 103 may be moved to an intermediate position, wherein the intermediate position is a position in between the retracted position and deployed position.

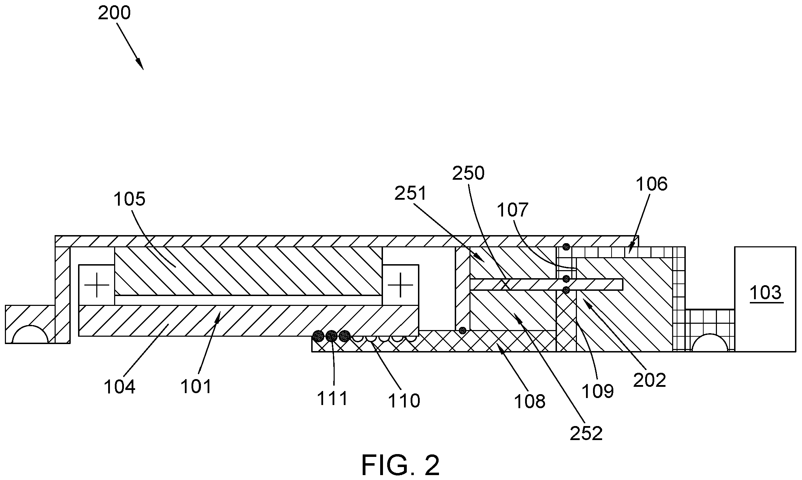

Referring to Fig. 2, a second aircraft control surface actuation system 200 is shown. The second system 200 comprises the actuator 101 and the aircraft control surface 103 previously described with reference to the embodiment of Fig. 1, and repeated description of these components is omitted. The second aircraft control surface actuation system 200 further comprises a second reducer 202. The second reducer 202 comprises all of the features of the first reducer 102 shown in the embodiment of Fig. 1., and repeated description of these features is omitted. In the embodiment shown in Fig. 2, the first chamber 112 of the second reducer 202 comprises a first sub-chamber 251 and a second sub-chamber 252.

The second reducer 202 further comprises a valve 250. The valve 250 is configured to control the hydraulic communication between the first piston 106 and the second piston 108. The valve 250 controls the hydraulic communication between the first piston 106 and the second piston 108 by controlling flow of hydraulic fluid in the first chamber 112. The valve 250 controls the flow of hydraulic fluid in the first chamber 112 by controlling the movement of the hydraulic fluid between the first sub-chamber 251 and the second sub-chamber 252. The first sub-chamber 251 is positioned adjacent to the first piston 106. The first sub-chamber 251 is in direct hydraulic communication with the first piston 106. The second sub-chamber 252 is positioned adjacent to the second piston 108. The second sub-chamber 252 is in direct hydraulic communication with the second piston 108. The first sub-chamber 251 is in hydraulic communication with the second piston 108 via the second sub-chamber 252. The second sub-chamber 252 is in hydraulic communication with the first piston 106 via the first sub-chamber 251.

If the valve 250 is completely open, the first sub-chamber 251 and second sub-chamber 252 are in fluid communication. If the valve 250 is completely open, hydraulic fluid is able to move substantially freely between the first sub-chamber 251 and second sub-chamber 252. If the valve is completely open, the first sub-chamber 251 is in fluid communication with the second piston 108 via the second sub-chamber 252. If the valve is completely open, the second sub chamber 252 is in fluid communication with the first piston 106 via the first sub-chamber 251.

In this embodiment, the valve 250 is configured to resist the flow of the hydraulic fluid to resist movement of the first piston 106. If the valve 250 resists the flow of hydraulic fluid between the first sub-chamber 251 and second sub-chamber 252, a greater force is required for the second piston 108 to move. This means that a greater force is required for the first piston 106 to move. If the valve 250 is configured to resist the flow of the hydraulic fluid, the valve 250 may allow the initiation of a damping mode, wherein movement of the aircraft control surface 103 is resisted in the damping mode. This may be used, for example, during braking of the aircraft control surface 103.

The valve 250 is closable to prevent movement of the first piston 106. If the valve 250 is closed, the flow of hydraulic fluid between the first sub-chamber 251 and the second sub-chamber 252 is prevented. If the hydraulic fluid cannot flow between the first sub-chamber 251 and the second sub-chamber 252, the first piston 106 and second piston 108 are unable to move. If the first piston 106 is unable to move, the aircraft control surface 103 is fixed in position. When the valve 250 is closed, the aircraft control surface 103 becomes fixed. The valve 250 is therefore configured to act as a braking device. The valve 250 allows the implementation of a locked mode, as movement of the aircraft control surface 103 is prevented.

In alternative embodiments, the valve 250 may be configured to control the hydraulic communication between the first piston 106 and second piston 108 by controlling flow of hydraulic fluid in the second chamber 113. In some embodiments, the reducer may comprise a second valve such that the flow of hydraulic fluid in both the first chamber 112 and the second chamber 113 can be controlled simultaneously.

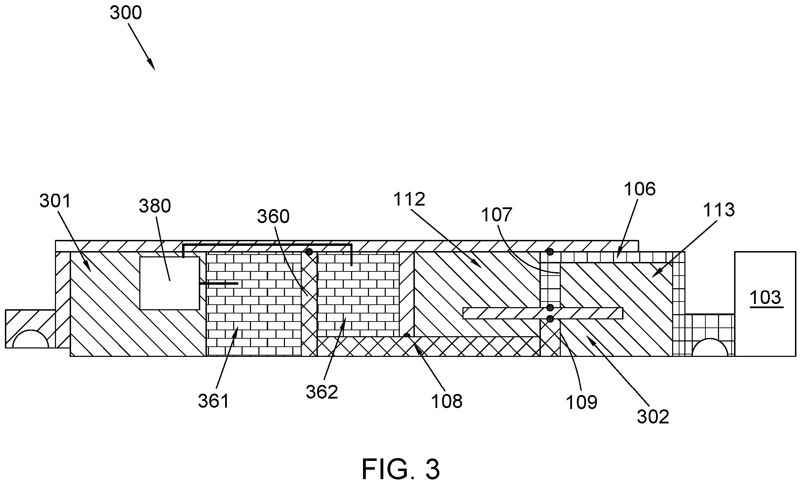

Referring to Fig. 3, a third aircraft control surface actuation system 300 is shown. The third system 300 comprises the aircraft control surface 103 of the previous embodiments shown in Fig. 1 and Fig. 2, and repeated description of this component is omitted. The third aircraft control surface actuation system 300 further comprises an actuator 301 and a third reducer 302. In the embodiment shown in Fig. 3, the actuator 301 is an electro-hydraulic actuator 301 comprising a motor (not shown) and a pump 380. The third reducer 302 comprises all of the features of the first reducer 102 shown in the embodiments of Fig. 1 and Fig. 2., and repeated description of these features is omitted.

The actuator 301 further comprises an input face 360, a first input chamber 361 and a second input chamber 362. The first input chamber 361 and second input chamber 362 are configured to contain hydraulic fluid. The first input chamber 361 and the second input chamber 362 are separated from the first chamber 112 and the second chamber 113. The input face 360 is configured to separate the first input chamber 361 and the second input chamber 362, such that hydraulic fluid cannot flow between the first input chamber 361 and the second input chamber 362. The input face 360 is coupled to the second piston 108, such that the actuator 301 may actuate the second piston 108. In this embodiment, the input face 360 is integrally formed with the second piston 108, such that it is positioned at an opposite end of the second piston 108 relative to the second frontal face 109.

To actuate the second piston 108, the electro-hydraulic actuator 301 produces an input pressure in the first input chamber 361. The input pressure in the first input chamber 361 is produced by the pump 380 of the actuator 301 creating a flow rate between the first input chamber 361 and second input chamber 362. The input pressure produces an input force acting on the second piston 108, causing the second piston 108 to move. More specifically, the input force acts on the input face 360, causing the second piston 108 to move.

The first piston 106 and second piston 108 of the aircraft control actuation system 300 are in hydraulic communication, as described with reference to the embodiment of Fig. 1. In the embodiment of Fig. 3, the second load applied by the second piston 108 is responsive to the input force acting on the second piston 108. The input force is dependent on the input pressure produced by the actuator 301. It follows that the second load is dependent on the input pressure. This means that the input pressure produced by the electro-hydraulic actuator 301 causes the movement provided by the first piston 106 to the aircraft control surface 103. This means that the movement provided by the first piston 106 to the aircraft control surface 103 is dependent on the input pressure produced by the electro-hydraulic actuator 301.

The reduction ratio can be used to determine the ratio between the first speed/load and the second speed/load, as previously described with reference to the embodiment of Fig. 1.

In the third aircraft control surface actuation system 300 of Fig. 3, the second frontal area 109 is smaller than the first frontal area 107, such that the reduction ratio is less than 1. More specifically, the second frontal area 109 is substantially half the first frontal area 107, such that the reduction ratio is substantially 0.5. As discussed previously, if the reduction ratio = 0.5, the second load will be 2 times smaller than the first load. Given the second load is dependent on the first pressure, a reduction ratio less than 1 allows the first pressure to be reduced. This means that the actuator 301 is required to produce a smaller input pressure whilst high first speed and high first load requirements are maintained at the first piston 106. If a smaller input pressure is required, it may be possible to use lighter materials in the system 300, and a smaller amount of space may be required.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. An aircraft control surface actuation system comprising a reducer and an aircraft control surface, the reducer comprising:
a first piston with a first frontal area, the first piston configured to move the aircraft control surface; and
a second piston with a second frontal area, the second piston configured for actuation by an actuator,
wherein the second piston is in hydraulic communication with the first piston, such that movement of the second piston causes movement of the first piston,
wherein the second frontal area is different to the first frontal area to provide a reduction ratio between the actuator and the aircraft control surface.

2. The aircraft control surface actuation system of claim 1, wherein the second frontal area is larger than the first frontal area, such that the reduction ratio is greater than 1.

3. The aircraft control surface actuation system of claim 2, wherein the second frontal area is substantially twice the first frontal area, such that the reduction ratio is substantially 2.

4. The aircraft control surface actuation system of claim 1, wherein the second frontal area is smaller than the first frontal area, such that the reduction ratio is less than 1.

5. The aircraft control surface actuation system of claim 4, wherein the second frontal area is substantially half the first frontal area, such that the reduction ratio is substantially 0.5.

6. The aircraft control surface actuation system of any preceding claim, wherein the reducer further comprises a valve, the valve configured to control the hydraulic communication between the first piston and the second piston.

7. The aircraft control surface actuation system of claim 6, wherein the valve is configured to resist flow of a hydraulic fluid to resist movement of the first piston.

8. The aircraft control surface actuation system of claim 7, wherein the valve is closable to prevent movement of the first piston.

9. The aircraft control surface actuation system of any preceding claim, wherein the second piston comprises a screw element, the screw element configured for screw connection between the second piston and the actuator.

10. The aircraft control surface actuation system of any preceding claim, wherein the aircraft control surface actuation system further comprises the actuator.

11. The aircraft control surface actuation system of claim 10, wherein the actuator is an electro-mechanical actuator.

12. The aircraft control surface actuation system of claim 10, wherein the actuator is an electro-hydraulic actuator.

13. The aircraft control surface actuation system of any preceding claim, wherein the aircraft control surface is moveable in response to receipt of signals from an aircraft sensor.

14. An aircraft comprising the aircraft control surface actuation system of any preceding claim.
